# EUROPEAN PATENT APPLICATION

(11) **EP 2 570 180 A1**
(43) Date of publication of application: **20.03.2013**
(21) Application number: 11181399.4
(22) Date of filing: 15.09.2011
(51) Int. Cl.: B01J 19/00, C08F 2/01

(54) **Method for a continuous radical polymerization using microreactors**

(71) Applicant: Bayer MaterialScience AG, 51373 Leverkusen (DE)
(72) Inventor: Wamprecht, Christian, Dr., 41472 Neuss (DE); Bachmann, Rolf, Dr., 51469 Bergisch Gladbach (DE); Haverkamp, Verena, Dr., 51467 Bergisch Gladbach (DE); Henninger, Björn, Dr., 50968 Köln (DE)

(57) **Abstract**

The method comprises the steps of: mixing a monomer stream and an initiator stream in a mixing unit, thereby obtaining a reaction mixture stream; passing the reaction mixture stream through a first reaction unit, the reaction mixture stream entering the first reaction unit under a first pressure p1; and passing the reaction mixture stream through a second reaction unit, the reaction mixture stream exiting the second reaction unit under a second pressure p2. The first reaction unit comprises a canal with a length 11 an interior diameter d1 of ≤ 1 mm, the canal being in contact with a heat transfer medium. The second reaction unit comprises a canal with a length 12 an interior diameter d2 which is greater than d1, the canal being in contact with a heat transfer medium. The reaction is carried out under isothermal conditions and the difference p1 - p2 is ≤ 5 bar.

## Description

The present invention relates to a method for the radical polymerization of at least one radically polymerizable monomer. The invention also relates to a system for carrying out the method according to the invention, a radically polymerized polymer obtainable by a method according to the invention, the use of such polymers for the manufacturing of coatings, adhesives or sealants and to an article coated with a cross-linked polymer according to the invention.

Radical polymerizations are strongly exothermic reactions which usually lead to a large increase in the viscosity of the reaction mixture. It is known that temperature stress above a tolerable temperature leads to undesired side-effects such as discoloring, gel formation or a broadening of the molecular weight distribution. Simulations of exemplary processes have shown that running such polymerization reactions in a classical tube reactor is not economically feasible because a better heat transfer performance is counter-balanced by an excessive pressure drop in the system.

WO 99/54362 A1 discloses a process and apparatus for the continuous preparation of polymers Two reaction partners (starting materials) are stored in separate reservoirs and are transported using overpressure via heated heat exchangers into a micromixer by means of control and metering devices, which can be metering pumps. In the heat exchangers, the starting materials are heated, separately in each case, to the extent that during the mixing operation in the micromixer the required reaction temperature is immediately reached. The polymerization takes place in a downstream tube reactor which consists of tubes which are connected in series. Therefore, the micromixer is quasi in an adiabatic mode. The downstream tube reactors are heated in a classic fashion. The goal is to avoid a bimodal molecular weight distribution and high molecular weight fractions which could lead to clogging in the tube reactor.

EP 1 024 149 A2 relates to a continuous process for preparing polymers in a heat exchanger. The amount of monomer fed and polymer in the reactor is controlled to minimize fouling of the reactor. The use of steam to control the temperature of the reaction mixture is also disclosed.

JP 2006-199767 aims for a method to efficiently and smoothly produce a radically polymerized polymer of narrow molecular weight distribution in a short time by radical polymerization of a radically polymerizable monomer, and to provide a microreactor that is easily manufacturable. To this end, the method for producing the radically polymerized polymer comprises the following process: a radical polymerization initiator and a radically polymerizable monomer are introduced into reaction tubes each ≤ 2 mm in inner diameter with the sectional area enlarged stepwise in the reaction liquid flow direction and a polymerization reaction is conducted in a flow type in a homogeneous liquid state in the reaction tubes. The microreactor includes a jacket through which a temperature-controlling fluid can be made to flow and the plurality of reaction tubes arranged in parallel in the jacket each ≤ 2 mm in inner diameter with the sectional area enlarged stepwise in the reaction liquid flow direction. In this microreactor, by making the temperature-controlling fluid flow through the jacket, the reaction temperatures in the plurality of reaction tubes can be controlled.

None of the processes described addresses a combination of temperature control throughout the entire process, a channel geometry tailored to reaction progress and to the required heat transfer for each stage of the reaction and an appropriate flow profile in order to obtain polymers with specific, pre-determined properties such as mean molecular weight, molecular weight distribution residual monomer content and also to avoid a fouling within the reactor so as to avoid the clogging of the entire system.

It would be desirable to have such a process. The present invention therefore has the object of providing a process for the continuous radical polymerization with an improved temperature control.

This object has been achieved according to the invention by a method for the radical polymerization of at least one radically polymerizable monomer, comprising the steps of:
a) providing a monomer-containing feedstock stream and an initiator-containing feedstock stream;
b) mixing the monomer-containing feedstock stream and an initiator-containing feedstock stream in a mixing unit, thereby obtaining a reaction mixture stream;
c) passing the reaction mixture stream from the mixing unit through a first reaction unit, the reaction mixture stream entering the first reaction unit under a first pressure p1;
d) passing the reaction mixture stream from the first reaction unit through a second reaction unit, the reaction mixture stream exiting the second reaction unit under a second pressure p2; wherein:
   the first reaction unit comprises a canal with a length 11 an interior diameter d1 of ≥ 0.1 mm and ≤ 1 mm, the canal being in contact with a heat transfer medium;
   the second reaction unit comprises a canal with a length 12 an interior diameter d2 which is greater than d1, the canal being in contact with a heat transfer medium;
   the reaction occurring within the reaction mixture in the first reaction unit is carried out under isothermal conditions; and
   the difference p1 - p2 is ≤ 5 bar.

It has surprisingly been found that the method according to the invention allows the continuous production of radically polymerized polymers or copolymers with a defined mean molecular weight, a defined molecular weight distribution and a defined residual monomer content without fouling or clogging of the reaction system. It has also surprisingly been found that copolymers obtained using the method according to the invention and with a nearly identical molecular weight have a lower viscosity than copolymers obtained in a batch reaction. However, cross-linked coatings using polyols obtained in a reaction according to the invention display the virtually the same results in a variety of tests when compared to cross-linked coatings using polyols from a batch reaction.

Furthermore, the number and length of the individual channels can be tailored to desired specifications of the resulting polymer such as its residual monomer content. For example, a residual monomer content of less than 1 weight-% or even of less than 0.1 weight-% per monomer employed in the polymerization reaction can be achieved.

The method according to the present invention yields clear, colorless copolymers which are soluble in organic solvents such as ethyl acetate, n-propyl acetate, iso-propyl acetate, n-butyl acetate, n-hexyl acetate, n-heptyl acetate, 2-ethylhexyl acetate, methoxypropyl acetate, methyl ethyl ketone, methyl isobutyl ketone, toluene, xylene, mixtures of higher aromatics, solvent naphtha or any combination of these solvents. The copolymers obtainable by the method according to the invention are suitable as binders for coatings, adhesives, sealants, in particular for high solids systems.

The present invention is based on the realization that an initial polymerization reaction should take place in a reactor with small dimensions so as to ensure a good heat transfer during the reaction. In the first reaction unit the reaction is carried out within the canal under isothermal conditions. In the context of the present invention this is to be understood as a variation of the reaction temperature of no more than ± 5 °C. This can be undertaken by immersing the reaction unit in a heat transfer fluid. Another possibility is to pass channels with heat transfer fluids close to the reaction unit.

After the polymerization reaction has progressed further and the viscosity of the reaction mixture has increased accordingly, the reaction mixture is transferred into the second reaction unit for further reaction within its canal. Ideally, the two reaction units are joined to each other. The internal diameter of the canal in the second reaction unit is larger than in the first reaction unit. By this the increased viscosity can be accounted for so that a clogging of the canals can be avoided. The second reaction unit can also be immersed in a heat transfer fluid or one may pass channels with heat transfer fluids close to the reaction unit. It is also possible and beneficial to perform the reaction in the second reaction unit under isothermal conditions as well.

The channels, which may, for example, be linear or, in order to save space, wound into a coil, may thus be tailored in their dimensions for a low pressure drop and a high heat transfer. Of course, the channels should be closed channels with the exception of one or more inlets and one or more outlets for streams passing through them.

To reach the desired low pressure drop of ≤ 5 bar (preferably ≤ 3 bar) one may design the channel geometries accordingly or conduct the reaction at a specified mass flow. It is also possible to provide obstructions in the channels or at their beginnings or their end.

It also contemplated in the method according to the invention that the first reaction unit and the second reaction unit are kept at a different temperature. This allows for a temperature profile over the course of the reaction.

Suitable monomers in the monomer-containing feedstock stream include aromatic monomers such as styrene, α-methyl styrene or vinyl toluene; aliphatic esters of acrylic and/or methacrylic acid with 1 to 18 C-atoms such as ethyl acrylate, n-butyl acrylate, iso-butyl acrylate, n-hexyl acrylate, 2-ethylhexylacrylate, methyl methacrylate, ethyl methacrylate, n-butyl methacrylate, Stearyl methacrylate; cycloaliphatic esters of acrylic and/or methacrylic acid with 1 to 12 C-atoms in the alcohol component such as cyclohexyl methacrylate, isobornyl acrylate, isobornyl methacrylate; hydroxyalkyl esters of acrylic and/or methacrylic acid with 2 to 4 C-atoms in the hydroxyalkyl rest such as hydroxyethyl acrylate, hydroxypropyl acrylate, hydroxybutyl acrylate, hydroxyethyl methacrylate, hydroxypropyl methacrylate, reaction products of these hydroxymonomers with ε-caprolactone; α,β-monoolefinically unsaturated mono- or dicarboxylic acids with 3 to 7 C-atoms such as acrylic and/or methacrylic acid, and/or at least one hemiester of maleic or fumaric acid with 1 to 14 C-atoms in the alcohol rest such as maleic acid monoethyl ester, maleic acid monobutyl ester; further monomers such as acrylonitrile, methacrylonitrile, vinyl esters of aliphatic, optionally branched monocarboxylic acids with 1 to 10 C-atoms in the alcohol rest. This exemplary listing is not to be understood as limiting. It is also possible to use further unsaturated monomers as comonomers, cooligomers and even polymers with unsaturated groups.

Suitable initiators in the initiator-containing feedstock stream include common radical starters based on azo or peroxy compounds. Particularly suitable are 2,2'-azobis-(2-methylpropanenitrile), 2,2'-azobis-(2-methylbutannitrile), 1, 1'-azobis(cyclohexancearbonitrile), tert.-butylperoxy-2-ethylhexanoate, tert.-butylperoxydiethylacetate, tert.-butylperoxyisobutyrate, 1,1-di-tert.-butylperoxy-3,3,5-trimethylcyclohexane, 1,1-di-tert.-butylperoxycyclohexane, tert.-butylperoxy-3,5,5-trimethylhexanoate, tert.-butylperoxyisopropylcarbonate, tert.-butylperoxyacetate, tert.butylperoxybenzoate, dicumylperoxide, tert.-butylcumylperoxide, di-tert.-butylperoxide and di-tert.-amylperoxide.

Preferred embodiments and other aspects of the present invention are described below. They may be combined freely unless the context clearly indicates otherwise.

In one embodiment of the method according to the invention the second reaction unit further comprises mixing elements. These mixing elements may be micromixing elements and deployed at regular intervals throughout the unit. Using such mixing elements provides for the retention of pressure in a simple and elegant manner.

In another embodiment of the method according to the invention the reaction mixture stream exiting the second reaction is further passed into a vessel comprising mixing elements. Such a vessel can function as a retention and storage vessel. Mixing elements contained therein can be static mixing elements. This vessel may also be kept at the same temperature as the first and/or second reaction unit.

In another embodiment of the method according to the invention d2 is ≥0.3mm and < 2.5 mm. Preferred is an internal diameter d2 of ≥0.5 mm and ≤ 2.0 mm.

In another embodiment of the method according to the invention the canal of the first reaction unit has a circular cross-section and/or the canal of the second reaction unit has a circular cross-section,.

In another embodiment of the method according to the invention the ratio of 11:d1 is ≥ 1000:1 to ≤ 10000:1 and/or the ratio of 12:d2 is ≥ 1000:1 to ≤ 10000:1. A preferred ratio for 11:d1 is ≥ 4000:1 to ≤ 6000:1 1 and for 12:d2 is ≥ 2000:1 to ≤ 3000:1.

In another embodiment of the method according to the invention the monomer-containing feedstock stream comprises methyl methacrylate, styrene, hydroxypropyl methacrylate, butyl acrylate and/or acrylic acid. Preferred is a combination of all of these monomers.

In another embodiment of the method according to the invention the initiator-containing feedstock stream comprises dicumyl peroxide and/or di-tert.-butyl peroxide. Preferred is a combination of these initiators.

In another embodiment of the method according to the invention the reaction occurring within the reaction mixture in at least the first reaction unit is carried out at a temperature of ≥ 150 °C to ≤ 200 °C. A preferred temperature range is ≥ 160 °C to ≤ 170 °C. It is also preferred to maintain this temperature in the second reaction unit and, if present, in a downstream vessel.

The present invention also provides a system for carrying out the method according to the invention, comprising:
- a mixing unit adapted to mix a monomer-containing feedstock stream and an initiator-containing feedstock stream, thereby obtaining a reaction mixture stream;
- a first reaction unit adapted to receive the reaction mixture stream from the mixing unit and to discharge the reaction mixture stream after a passage through the first reaction unit;
- a second reaction mixture adapted to receive the reaction mixture stream from the first reaction unit and to discharge the reaction mixture stream after a passage through the second reaction unit; wherein the first reaction unit comprises a canal with a length 11 an interior diameter d1 of ≥ 0.1 mm and ≤ 1 mm, the canal being in contact with a heat transfer medium; and
the second reaction unit comprises a canal with a length 12 an interior diameter d2 which is greater than d1, the canal being in contact with a heat transfer medium.

Preferred embodiments of the system according to the invention may be the same as outlined in connection with the method above. Especially noteworthy are embodiments wherein d2 is ≥0.3 mm and ≤ 2.5 mm (preferably ≥0.5 mm and ≤ 2 mm) and/or wherein the ratio of 11:d1 is ≥ 1000:1 to ≤ 10000:1 (preferably ≥ 4000:1 to ≤ 6000:1) and/or the ratio of 12:d2 is ≥ 1000:1 to ≤ 10000:1 (preferably ≥ 2000:1 to ≤ 3000:1).

As it is apparent by the foregoing, the invention is also directed towards a radically polymerized polymer, obtainable by a method according to the present invention. With respect to the monomer units constituting the polymers and initiators used in its manufacture, reference is made to the description in connection with the method according to the invention.

If the monomer-containing feedstock stream comprises methyl methacrylate, styrene, hydroxypropyl methacrylate, butyl acrylate and acrylic acid (especially if the initiators comprise dicumyl peroxide and/or di-tert.-butyl peroxide), then polymers with the following characteristics may be obtained: viscosity of ≥ 800 mPa s to ≤ 1200 mPa s, preferably ≥ 1000 mPa s to ≤ 1100 mPa s (23 °C; Brookfield rotational viscosimeter); an acid number of ≥ 1 mg KOH/g to ≤ 6 mg KOH/g; preferably ≥ 3 mg KOH/g to ≤ 5 mg KOH/g (DIN 3682); an OH number of ≥ 40 mg KOH/g to ≤ 60 mg KOH/g, preferably ≥ 45 mg KOH/g to ≤ 55 mg KOH/g (DIN 53240 part 2), a hazen number of ≥ 40 APHA to ≤ 60 APHA, preferably ≥ 45 APHA to ≤ 65 APHA (ISO 6271), a weight average molecular weight Mₙ of ≥ 10000 g/mol to ≤ 15000 g/mol, preferably ≥ 13000 g/mol to ≤ 14000 g/mol and a number average molecular weight Mₙ of ≥ 3000 g/mol to ≤ 6000 g/mol, preferably ≥ 4000 g/mol to ≤ 5000 g/mol (determined by Gel Permeation Chromatography at 25°C, using tetrahydrofurane as eluent and polystyrene stand for calibration).

Another aspect of the present invention is the use of the polymers according to the invention for the manufacturing of coatings, adhesives or sealants. Examples for substrates include wood, board, metal, stone, concrete, glass, cloth, leather, paper and foam. Preferably, the metal substrate is selected from the group consisting of steel, cold rolled steel, hot rolled steel, stainless steel, aluminum, steel coated with zinc metal, steel coated with zinc alloys and mixtures thereof.

Through combination with cross-linkers it is possible, depending on the reactivity or, where appropriate, blocking of the cross-linkers, to prepare both one-component (1K) and two-component (2K) coating materials. 1K coating materials for the purposes of the present invention are coating materials in which binder component and cross-linker component can be stored together without any cross-linking reaction taking place to a marked extent or to an extent which is detrimental to the subsequent application. The cross-linking reaction takes place only on application, after the cross-linker has been activated. This activation can be effectuated, for example, by raising the temperature. 2K coating materials for the purposes of the present invention are coating materials in which binder component and cross-linker component have to be stored in separate vessels owing to their high reactivity. The two components are not mixed until shortly prior to application, when they react generally without additional activation. In order to accelerate the cross-linking reaction, however, it is also possible to use catalysts or to employ higher temperatures.

Examples of suitable cross-linkers are polyisocyanate cross-linkers, amide- and amine-formaldehyde resins, phenolic resins, aldehyde resins and ketone resins, such as phenol formaldehyde resins, resoles, furan resins, urea resins, carbamic ester resins, triazine resins, melamine resins, benzoguanamine resins, cyanamide resins, aniline resins, as described in "Lackkunstharze", H. Wagner, H.F. Sarx, Carl Hanser Verlag München, 1971. Preferred cross-linkers are polyisocyanates.

Polyisocyanates can be used with free and/or blocked isocyanate groups. Suitable such cross-linker resins include blocked polyisocyanates based for example on isophorone diisocyanate, hexamethylene diisocyanate, 1,4-diisocyanatocyclo-hexane, bis(4-isocyanatocyclohexane)methane or 1,3-diisocyanatobenzene or based on paint polyisocyanates such as polyisocyanates which contain biuret or isocyanurate groups and are derived from 1,6-diisocyanatohexane, isophorone diisocyanate or bis(4-isocyanatocyclohexane)methane or paint polyisocyanates which contain urethane groups and are based on 2,4- and/or 2,6-diisocyanato-toluene or isophorone diisocyanate on the one hand and low molecular weight polyhydroxyl compounds such as trimethylolpropane, the isomeric propanediols or butanediols or any desired mixtures of such polyhydroxyl compounds on the other.

Suitable blocking agents for the stated polyisocyanates are, for example, monohydric alcohols such as methanol, ethanol, butanol, hexanol, cyclohexanol, benzyl alcohol, oximes such as acetoxime, methyl ethyl ketoxime, cyclohexanone oxime, lactams such as ε-caprolactam, phenols, amines such as diisopropylamine or dibutylamine, dimethylpyrazole or triazole, and also dimethyl malonate, diethyl malonate or dibutyl malonate.

Preference is given to the use of low-viscosity, hydrophobic polyisocyanates with free isocyanate groups based on aliphatic, cycloaliphatic, araliphatic and/or aromatic isocyanates, more preferably on aliphatic or cycloaliphatic isocyanates, since in this way it is possible to achieve a particularly high level of resistance in the coating film. These polyisocyanates generally have at 23 °C a viscosity of from 10 to 3500 mPas (determined at low shearv rates of 40s⁻¹). If necessary, the polyisocyanates can be employed as a blend of small amounts of inert solvents, in order to lower the viscosity to a level within the stated range. Triisocyanatononane as well can be used alone or in mixtures as a cross-linker component.

In principle it is of course also possible to use mixtures of different cross-linker resins.

Customary coatings auxiliaries and additives can be added both to the coating system before, during or after its preparation and to the binder or cross-linker components present in the said system. Examples include pigments, dulling agents, catalysts, anti-skinning agents, anti-settling agents and the like.

The present invention also encompasses an article coated with a cross-linked polymer according to the invention.

The present invention will be further described with reference to the following examples without wishing to be limited by them.

### Example 1:

The respective feedstock streams were metered using a Pharmacia P500 high precision pump. The feedstock streams were then mixed in a cascade micro-mixer (Ehrfeld). Then the reaction mixture was passed through a capillary reactor (interior diameter of 1 mm, length of 5 m), followed by another capillary reactor (interior diameter of 2.2 mm, length of 5 m) with micromixer units (IKSM structure, 4 units spaced at 0.5 m, 0.5 m, 1 m and 2 m, respectively) and a vessel with static mixer units (volume of 17.5 ml). The entire reaction apparatus was held at the reaction temperature of 160 °C by immersion into a heat transfer fluid and the reaction time was 35 minutes.

The feedstock streams were an initiator solution and a monomer mixture with the following respective compositions:

| **Initiator/solvent** | **Weight-%** |
|---|---|
| Xylene | 93.7 |
| Dicumyl peroxide | 5.4 |
| Di-tert.-butyl peroxide | 0.7 |

| **Monomer** | **Weight-%** |
|---|---|
| Methyl methacrylate | 2.0 |
| Styrene | 45.5 |
| Hydroxypropyl methacrylate | 21.7 |
| Butyl acrylate | 30.1 |
| Acrylic acid | 0.7 |

The resulting copolymerisate was adjusted to a solids content of 59.8 weigh-t% by addition of xylene. A clear, nearly colorless was obtained with a viscosity of 1070 mPa s (23 °C; Brookfield rotational viscosimeter), an acid number of 4.8 mg KOH/g (DIN 3682), an OH number of 50 mg KOH/g (DIN 53240 part 2), a hazen number of 50 APHA (ISO 6271), a residual monomer content of 0.11 weight-% butyl acrylate and less than 0.03 weight-% other monomers, a weight average molecular weight Mₙ of 13600 g/mol and a number average molecular weight Mₙ of 4710 g/mol (Gel Permeation Chromatography, 25°C, Tetrahydrofurane as eluent, Polystyrene standard used for calibration).

### Comparative example:

A 60 weight-% copolymerisate solution (xylene) was prepared with the same composition of the starting materials as in example 1, the difference being that a conventional 5 1 pressure reactor was used as the reaction vessel. The reactor was charged with the solvent and heated to the polymerization temperature of 160 °C. Then the monomer mixture and the initiator solution were added in parallel at the same time and the same internal reaction temperature over 90 minutes (monomer mixture) and 105 minutes (initiator solution). The reaction mixture was kept at 160 °C for a further 60 minutes.

A nearly clear polymer solution was obtained with a solids content of 59.6 weight-%, a viscosity of 1820 mPa s (23 °C; Brookfield rotational viscosimeter), an acid number of 5.3 mg KOH/g (DIN 3682), an OH number of 52 mg KOH/g (DIN 53240 part 2), a hazen number of 55 APHA (ISO 6271), a residual monomer content of 0.1 weight-% (styrene), 0.08 weight-% hydroxypropyl methacrylate, 0.03 weight-% butyl acrylate and less than 0.02 weight-% acrylic acid and methyl methacrylate, a weight average molecular weight Mₙ of 13450 g/mol and a number average molecular weight Mₙ of 4679 g/mol (Gel Permeation Chromatography, 25°C, Tetrahydrofurane as eluent, Polystyrene standard used for calibration).

### Application testing:

Clear coats were prepared in order to assess the general properties of the products obtained in the examples. The polyols from example 1 and the comparative example were cross-linked with a typical coatings polyisocyanate with a molar ration of NCO to OH groups of ca. 1:1. The polyisocyanate used was Desmodur® N 3390, an isocyanurate group-containing polyisocyanate based on 1,6-diisocyanatohexane, 90% solution in butyl acetate/solvent naphtha 100 (1:1) with an NCO group content of the solution of ca. 19.4 weight-% and a content of free 1,6-diisocyanatohexane of less than 0.5 weight-%.

Additives used (weight-% with respect to the sum of the solid contents of polyol and polyisocyanate) were a PUR catalyst (Dabco® 33 LV, Air Products, 10% solution in butyl acetate, 0.3 weight-%), a spreading adjuvant (BYK® 33, BYK Chemie, 50% solution in butyl acetate, 0.3 weight-%), a UV absorber (Tinuvin® 1130, Ciba Geigy, 50% solution in xylene, 2.0 weight-%) and a light protection additive (Tinuvin® 292, Ciba Geigy, 50% solution in xylene, 1.0 weight-%).

The solvent used was a mixture of methoxypropyl acetate, xylene and n-butyl acetate (1:1:1). The formulation was set to ca. 56 weight-% binder, ca. 2 weight-% additives and ca. 42 weight-% solvent. The flow time (DIN 53 211, 4 mm opening) was ca. 20 seconds. This corresponded to a ready to spray formulation.

Coatings were applied onto glass plates and dried at room temperature and at 60 °C for 30 minutes each. The drying speed (DIN 53 150) was determined and the coated plates were stored at room temperature for 7 days. A dry film thickness of ca. 40 µm to 50 µm was obtained.

Subsequent tests were the König hardness (DIN 53 157), the Gardner gloss at 60° (DIN 67 530) and the resistance to gasoline after 1, 2, 3 and 4 days storage at room temperature. A value of 0 (best) indicates no change, a value of 5 (worst) indicates a complete dissolution of the coating film at the affected area. Erichsen drawing tests (ISO 1520) were conducted using coated sheet metal. Sand dryness T1 and complete dryness T3 were determined according to DIN 53 150. The results are given in the table below.

| **Coating using polyol of:** | **Example 1** | **Comp. example** |
|---|---|---|
| Drying time at room temp. | | |
| Sand dryness T1 | 75 minutes | 80 minutes |
| Complete dryness T3 | 6.5 hours | 6.5 hours |
| Pendulum attenuation | | |
| 23 °C/7 days room temp. | 162 | 161 |
| 30°C/60 °C/7 days room temp. | 185 | 188 |
| Gasoline resistance | | |
| 23 °C/1 day room temp.; 1 min./5 min. | 1/2 | 1/2 |
| 23 °C/2 days room temp.; 1 min./5 min. | 0/1 | 0/1 |
| 23 °C/3 days room temp.; 1 min./5 min. | 0/0 | 0/0 |
| 23 °C/4 days room temp.; 1 min./5 min. | - | - |
| Erichsen drawing [mm] | 10,5 | 10,0 |
| Gloss (60° angle) | 92/90 | 90/89 |

### Discussion:

The application testing results reveal that the clear coatings based on the polyols of example 1 and the comparative example show a comparable quality with respect to drying time, gasoline resistance, elasticity and gloss. This is surprising because the polyols prepared using the method according to the invention have a viscosity which is 41.2% less than the polyol of the comparative example. At least a slower drying, a lower film hardness and a lesser gasoline resistance would have been expected.

## Claims

1. A method for the radical polymerization of at least one radically polymerizable monomer, comprising the steps of:
a) providing a monomer-containing feedstock stream and an initiator-containing feedstock stream;
b) mixing the monomer-containing feedstock stream and an initiator-containing feedstock stream in a mixing unit, thereby obtaining a reaction mixture stream;
c) passing the reaction mixture stream from the mixing unit through a first reaction unit, the reaction mixture stream entering the first reaction unit under a first pressure p1;
d) passing the reaction mixture stream from the first reaction unit through a second reaction unit, the reaction mixture stream exiting the second reaction unit under a second pressure p2;
**characterized in that**
the first reaction unit comprises a canal with a length 11 an interior diameter d1 of ≥0.1 mm and ≤ 1 mm, the canal being in contact with a heat transfer medium;
the second reaction unit comprises a canal with a length 12 an interior diameter d2 which is greater than d1, the canal being in contact with a heat transfer medium;
the reaction occurring within the reaction mixture in the first reaction unit is carried out under isothermal conditions; and that
the difference p - p2 is ≤ 5 bar.

2. The method according to claim 1, wherein the second reaction unit further comprises mixing elements.

3. The method according to claim 1, wherein the reaction mixture stream exiting the second reaction is further passed into a vessel comprising mixing elements.

4. The method according to claim 1, wherein d2 is ≥ 0.3mm and ≤ 2.5 mm.

5. The method according to claim 1, wherein the canal of the first reaction unit has a circular cross-section and/or the canal of the second reaction unit has a circular cross-section.

6. The method according to claim 1, wherein the ratio of 11:d1 is ≥ 1000:1 to ≤ 10000:1 and/or the ratio of 12:d2 is ≥ 1000:1 to ≤ 10000:1.

7. The method according to claim 1, wherein the monomer-containing feedstock stream comprises methyl methacrylate, styrene, hydroxypropyl methacrylate, butyl acrylate and/or acrylic acid.

8. The method according to claim 1, wherein the initiator-containing feedstock stream comprises dicumyl peroxide and/or di-tert.-butyl peroxide.

9. The method according to claim 1, wherein the reaction occurring within the reaction mixture in the at least the first reaction unit is carried out at a temperature of ≥ 150 °C to ≤ 200 °C.

10. A system for carrying out the method according to one or more of claims 1 to 9, comprising:
- a mixing unit adapted to mix a monomer-containing feedstock stream and an initiator-containing feedstock stream, thereby obtaining a reaction mixture stream;
- a first reaction unit adapted to receive the reaction mixture stream from the mixing unit and to discharge the reaction mixture stream after a passage through the first reaction unit;
- a second reaction mixture adapted to receive the reaction mixture stream from the first reaction unit and to discharge the reaction mixture stream after a passage through the second reaction unit;
**characterized in that**
the first reaction unit comprises a canal with a length 11 an interior diameter d1 of ≥0.1 mm and ≤ 1 mm, the canal being in contact with a heat transfer medium; and
the second reaction unit comprises a canal with a length 12 an interior diameter d2 which is greater than d1, the canal being in contact with a heat transfer medium.

11. The system according to claim 10, wherein d2 is ≥ 0.3 mm and ≤ 2.5 mm.

12. The system according to claim 10, wherein the ratio of 11:d1 is ≥ 1000:1 to ≤ 10000:1 and/or the ratio of 12:d2 is ≥ 1000:1 to ≤ 10000:1.

13. A radically polymerized polymer, obtainable by a method according to one or more of claims 1 to 9.

14. Use of the polymers according to claim 14 for the manufacturing of coatings, adhesives or sealants.

15. An article coated with a cross-linked polymer according to claim 13.
